# EUROPÄISCHE PATENTSCHRIFT

(11) **EP 2 989 706 B1**
(45) Veröffentlichungstag und Bekanntmachung des Hinweises auf die Patenterteilung: **18.11.2020**
(21) Anmeldenummer: 14708519.5
(22) Anmeldetag: 26.02.2014
(51) Int. Cl.: H02J 1/00

(54) **KRAFT-WÄRME-KOPPLUNGSANLAGE UND VERFAHREN**
COGENERATION PLANT AND PROCESS
APPAREIL ET PROCEDE DE COGÉNÉRATION

(30) Priorität: 23.04.2013 DE 102013207349
(43) Veröffentlichungstag der Anmeldung: 02.03.2016
(73) Patentinhaber: Robert Bosch GmbH, 70442 Stuttgart (DE)
(72) Erfinder: FRIEDE, Wolfgang, 71384 Weinstadt (DE); LIMBECK, Uwe, 73230 Kirchheim Unter Teck (DE)
(86) Internationale Anmeldenummer: PCT/EP2014/053680
(87) Internationale Veröffentlichungsnummer: WO 2014/173559

(56) Entgegenhaltungen:
- EP-A1- 2 113 979
- EP-A1- 2 157 381
- WO-A1-2004/057174
- DE-A1- 10 003 186
- DE-C- 662 880

## Beschreibung

Die Erfindung betrifft eine Kraft-Wärme-Kopplungsanlage gemäß dem Oberbegriff des ersten Anspruchs, wie von EP 2 113 979 A1 offenbart, sowie ein Verfahren zum Betreiben einer solchen Anlage gemäß Anspruch 6.

Mit Kraft-Wärme-Kopplungsanlagen werden zwei Energieformen erzeugt: Strom und Wärme. Kraft-Wärme-Kopplungsanlagen nutzen die bei der Stromerzeugung anfallende Abwärme, beispielsweise für eine Raumbeheizung und/oder für eine Warmwasserbereitung öffentlicher oder privater Gebäude und/oder für industrielle Prozesse, zum Beispiel als Prozesswärme in der chemischen Industrie oder bei einer Lebensmittelherstellung.

Im Vergleich zur separaten Erzeugung von Strom und Wärme wird bei der Kraft-Wärme-Kopplung der Energieverbrauch um mehr als ein Drittel und der CO₂-Ausstoß um bis zu 50 % reduziert. Daher spielt die Kraft-Wärme-Kopplung eine zunehmend wichtigere Rolle auf dem Energiemarkt.

Eine Kraft-Wärme-Kopplungsanlage umfasst als wesentliche Komponenten ein Kraft-Wärme-Kopplungsaggregat als elektrische Energiequelle sowie eine Wechselrichteranordnung, mittels derer der Gleichstrom der Energiequelle in netzkonformen Wechselstrom umgerichtet wird. Dabei weist die Wechselrichteranordnung insbesondere folgende Bauteile auf:
Einen Gleichstromsteller zur Spannungsanpassung zwischen Energiequelle und Zwischenkreis, einen Kondensator im Zwischenkreis sowie einen Wechselrichter zur Wandlung der Spannung des Zwischenkreises in netzkonforme Wechselspannung.

Außerdem können in Abhängigkeit der jeweils speziellen Anlagen- und Betriebssituation vorhanden sein: Ein Spitzenlastkessel, ein Speicher für heißes Trink- und/oder Heizwasser und/oder eine übergeordnete Steuerung.

Besonders interessant als Energiequelle für Kraft-Wärme-Kopplungsanlagen sind Brennstoffzellensysteme auf Basis von Festoxid-Brennstoffzellen (Solid Oxide Fuel Cells, SOFCs). Beispielsweise ist aus DE 10 2010 001 011 A1 eine Kraft-Wärme-Kopplungsanlage mit einem derartigen Brennstoffzellensystem mit Spitzenkessel bekannt. Diese Kraft-Wärme-Kopplungsanlagen werden in der Regel mit Erdgas aus dem Erdgasnetz betrieben, wobei die Betriebstemperaturen zwischen 650 °C und 1000 °C betragen.

Ein als Energiequelle eingesetztes Brennstoffzellensystem umfasst üblicherweise folgende Komponenten: Einen Brennstoffzellenstack mit mindestens einer Brennstoffzelle, den Brennstoffzellenstack umgebende heiße Komponenten wie Reformer, Brenner, Wärmetauscher (Hot Box) sowie Peripheriekomponenten wie Gebläse, Pumpen und Ventile.

Kraft-Wärme-Kopplungsanlagen mit Festoxid-Brennstoffzellensystemen weisen einen relativ hohen elektrischen Wirkungsgrad von bis zu 60 % auf.

Für gewöhnlich dienen Kraft-Wärme-Kopplungsanlagen zur Einspeisung von elektrischer Energie in ein öffentliches Stromnetz. Dieses gibt die Spannung und Frequenz vor, deckt Bedarfsspitzen, welche über die erzeugte Energiemenge hinaus gehen, und nimmt über den Bedarf des Gebäudes hinaus erzeugte Leistung auf. Besonders interessant ist eine Kraft-Wärme-Kopplungsanlage, wenn die Stromerzeugung auch dann genutzt werden kann, wenn das öffentliche Stromnetz, zum Beispiel infolge eines Stromausfalls, nicht verfügbar ist. Dieser Zustand wird als Inselbetrieb bezeichnet. Da das öffentliche Stromnetz nicht mehr als Puffer dienen kann, stellt dieser Betriebsfall besonders hohe Ansprüche an die Dynamik der Stromerzeugung, weil die Kraft-Wärme-Kopplungsanlage auf eine Laständerung beim Ein- und Ausschalten eines Verbrauchers unmittelbar reagieren muss. Dabei umfasst der singuläre Begriff Verbraucher immer auch eine Mehrzahl an Verbrauchern.

Mithin unterliegen Kraft-Wärme-Kopplungsanlagen im Inselbetrieb üblicherweise hohen Lastwechselraten. Dies stellt insbesondere bei Kraft-Wärme-Kopplungsanlagen mit einem Brennstoffzellensystem als Energiequelle eine Herausforderung dar, weil schnelle Änderungen im Betrieb zu einer beschleunigten Alterung des Brennstoffzellensystems führen.

Im Inselbetrieb kann die Kraft-Wärme-Kopplungsanlage ihre Peripheriekomponenten versorgen. Werden darüber hinaus auch ein Spitzenkessel und gegebenenfalls benötigte Pumpen und Regler versorgt, kann auch bei Stromausfall beispielsweise eine Wärmeversorgung eines Gebäudes sichergestellt werden. Denkbar ist außerdem eine Funktion als Notstromversorgung, wodurch - soweit die maximale Leistung nicht überschritten wird - auch externe Verbraucher wie Kühlgeräte oder Kommunikationseinrichtungen von der Kraft-Wärme-Kopplungsanlage mit elektrischer Energie versorgt und weiter betrieben werden können.

Der Stand der Technik bietet dazu folgende Lösungsmöglichkeiten:
- einen Inselbetrieb ohne Versorgung von Komponenten, welche nicht zu den Peripheriekomponenten des Brennstoffzellensystems gehören;
- Auslegung der Kraft-Wärme-Kopplungsanlage mit Brennstoffzellensystem auf maximale Dynamik, was die Kosten für die Komponenten erhöht und eine beschleunigte Stack-Degradation verursachen kann;
- Einsatz eines elektrischen Energiespeichers, beispielsweise einer Batterie oder eines (Ultra-)Kondensators, zur Dämpfung der dynamischen Last. Dies ist mit hohen Kosten verbunden.

Der Erfindung liegt die Aufgabe zugrunde, die Nachteile des Standes der Technik zu überwinden und eine Kraft-Wärme-Kopplungsanlage zur Verfügung zu stellen, welche einen Weiterbetrieb eines Kraft-Wärme-Kopplungsaggregats im Inselbetrieb bei gleichzeitiger Versorgung einer oder mehrerer dynamischer Lasten ermöglicht. Darüber hinaus soll ein Verfahren zum Betreiben einer solchen Anlage zur Verfügung gestellt werden, das eine lange Lebensdauer der Kraft-Wärme-Kopplungsanlage sicherstellt.

Erfindungsgemäß wird dies mit den Merkmalen der Patentansprüche 1 und 6 gelöst.

Vorteilhafte Weiterbildungen sind den Unteransprüchen 2 bis 5 bzw. 7 bis 9 zu entnehmen.

Eine Kraft-Wärme-Kopplungsanlage, insbesondere eine Brennstoffzellenanlage, zur Bereitstellung von elektrischer Leistung und Wärme, wobei die Wärme wenigstens einem Wärme verbrauchenden Prozess zuführbar ist, mit einer elektrischen Energiequelle, insbesondere einem Brennstoffzellenstack mit mindestens einer Brennstoffzelle, und einer der Energiequelle nachgeschalteten Wechselrichteranordnung zur Verbindung mit mindestens einem elektrischen Verbraucher, insbesondere einem Stromnetz, ist erfindungsgemäß dadurch gekennzeichnet, dass eine geregelte Widerstandslast parallel zur Energiequelle geschaltet ist.

Benötigt der Verbraucher weniger elektrische Leistung als von der Energiequelle der Kraft-Wärme-Kopplungsanlage bereitgestellt wird, so kann die nicht benötigte elektrische Leistung in der zur Energiequelle parallel geschalteten, geregelten Widerstandslast abgebaut und beispielsweise in Wärme umgewandelt werden. Dadurch kann auf einfache, kostengünstige Weise auf einen geringeren Leistungsbedarf des Verbrauchers reagiert werden, ohne dass eine Änderung der von der Energiequelle abgegebenen Leistung erfolgt. Diese kann vielmehr mit konstanter Leistung betrieben werden. Zugleich ist diese Arbeitsweise besonders schonend für die Komponenten des Systems, insbesondere für den Stack, sodass eine lange Lebensdauer der Kraft-Wärme-Kopplungsanlage, insbesondere einer Brennstoffzellenanlage mit Brennstoffzellenstack, sichergestellt werden kann.

Die Erfindung sieht vor, dass die Wechselrichteranordnung einen ersten, eingangsseitigen Gleichstromsteller und einen ausgangsseitigen Wechselrichter sowie gegebenenfalls einen Zwischenkreis aufweist.

Dabei kann mittels des eingangsseitigen Gleichstromstellers der Wechselrichteranordnung eine Spannungsanpassung zwischen der Energiequelle und einem gegebenenfalls vorhandenen Zwischenkreis mit Kondensator erfolgen.

Dem ausgangsseitigen Wechselrichter ist eine Steuerelektronik zugeordnet, sodass eine eingangsseitige Spannung, beispielsweise die Spannung eines Zwischenkreises, in netzkonforme Wechselspannung, z. B. 230 V, 50 Hz, umgerichtet werden kann. Die abgegebene elektrische Leistung ergibt sich aus der Impedanz der angeschlossenen Verbraucher.

Eine weitere Ausführungsform der Kraft-Wärme-Kopplungsanlage ist dadurch gekennzeichnet, dass sie eine erste Steuerelektronik zur Regelung einer elektrischen Leistung, einer Spannung und/oder eines Stromes der Energiequelle aufweist, die dem ersten Gleichstromsteller zugeordnet ist, mit einem ersten Sollwertgeber, einem ersten Regler sowie einem ersten Tiefpass. Dabei kann der Tiefpass auch als gleitender Mittelwert, vorteilhafterweise über eine ganze Zahl von halben Netzperioden, ausgebildet sein.

Mit Hilfe der ersten Steuerelektronik können die elektrische Leistung oder die Spannung und/oder der Strom der Energiequelle geregelt werden. Beispielsweise kann der maximale oder höchste zu erwartende Wert als Sollwert vorgegeben werden. Darüber hinaus kann jederzeit auf wechselnde Leistungsanforderungen des Verbrauchers reagiert werden, beispielsweise durch Nachregelung eines Sollwertes oder mehrerer Sollwerte oder durch entsprechende Anpassung der Leistungsaufnahme der geregelten Widerstandslast.

Bei einer weiteren Ausführungsform der Kraft-Wärme-Kopplungsanlage ist vorgesehen, dass die Widerstandslast einen zweiten Gleichstromsteller, eine resistive Last und eine zweite Steuerelektronik mit einem zweiten Sollwertgeber und einem zweiten Regler sowie einem zweiten Tiefpass aufweist. Dabei kann der Tiefpass auch als gleitender Mittelwert, vorteilhafterweise über eine ganze Zahl von halben Netzperioden, ausgebildet sein.

Ist die Widerstandslast dabei im Zwischenkreis zwischen dem ersten Gleichstromsteller und dem Wechselrichter angeordnet, kann dem zweiten, der Widerstandslast zugeordneten Gleichstromsteller über die zweite Steuerelektronik die Sollspannung des Zwischenkreises vorgegeben werden. Für ein 230 V-Stromnetz liegt die Sollspannung typischerweise zwischen 350 V und 450 V.

Ist zudem ein Tiefpass vorgesehen, so ist dieser bevorzugt vor dem Sollwertgeber der Steuerelektronik angeordnet. Mittels des Tiefpasses kann verhindert werden, dass durch die Stromnetzfrequenz bedingte Leistungsschwankungen auf die resistive Last der Widerstandslast übertragen werden.

Alternativ kann in einer weiteren Ausführungsform der Kraft-Wärme-Kopplungsanlage die Widerstandslast zwischen der Energiequelle und der Wechselrichteranordnung angeordnet sein.

Dabei sind mit dem zweiten Gleichstromsteller der Widerstandslast und der zweiten Steuerelektronik die elektrische Leistung, die Spannung und/oder der Strom der Energiequelle regelbar. Ist ein Zwischenkreis vorgesehen, kann dessen Spannung durch den ersten Gleichstromsteller der Wechselrichteranordnung geregelt werden. Gegebenenfalls kann der erste Gleichstromsteller auch entfallen. Für ein 230 V-Stromnetz liegt die Sollspannung im Zwischenkreis typischerweise zwischen 350 V und 450 V.

Eine weitere Ausführungsform der Kraft-Wärme-Kopplungsanlage ist dadurch gekennzeichnet, dass die resistive Last als Widerstandsheizung ausgebildet ist.

Wird mehr elektrische Leistung von der Energiequelle bereitgestellt als der Verbraucher benötigt, kann die nicht benötigte elektrische Leistung in der Widerstandslast in Wärme umgewandelt werden. Diese Wärme kann dann beispielsweise der Energiequelle, zum Beispiel einem Brennstoffzellensystem, für wenigstens einen Wärme verbrauchenden Prozess zur Verfügung gestellt werden, zum Beispiel zur Erwärmung eines Wärmeträgermediums wie Heiz- oder Trinkwasser oder Luft für die Raumheizung und/oder zur Vorwärmung von Medien des Brennstoffzellensystems und/oder zum Warmhalten heißer, den Brennstoffzellenstack umgebenden Teile, wie zum Beispiel Reformer und/oder Brenner und/oder Wärmetauscher einer Hot Box.

Das Verfahren zum Betreiben einer Kraft-Wärme-Kopplungsanlage ist dadurch gekennzeichnet, dass eine Summe aus einer von einer Energiequelle an einen Verbraucher abgegebenen elektrischen Leistung und einer von einer zur Energiequelle parallel geschalteten Widerstandslast verbrauchten elektrischen Leistung konstant gehalten wird, wobei vom Verbraucher nicht benötigte Leistung durch eine Regelung der Widerstandslast abgebaut wird.

Dabei kann die Energiequelle, insbesondere ein Brennstoffzellenstack mit mindestens einer Brennstoffzelle, dauerhaft bei einer konstanten, insbesondere maximalen, Leistung betrieben werden, ohne dass ihre Lebensdauer durch Lastwechsel negativ beeinträchtigt wird. Alternativ zur Leistungsregelung kann ein konstanter, insbesondere maximaler, Strom und/oder eine konstante, insbesondere minimale, Spannung gewählt werden.

Ohne die Widerstandslast würde für den Fall, dass der Verbraucher weniger elektrische Leistung benötigt als von der Energiequelle zur Verfügung gestellt wird, beispielsweise die nicht benötige elektrische Energie in einem Kondensator eines Zwischenkreises gespeichert werden. Dadurch würde die Spannung im Zwischenkreis ansteigen. Erfindungsgemäß wird die nicht benötigte elektrische Leistung in der Widerstandslast abgebaut. Dabei wird sie beispielsweise in einer resistiven Last der geregelten Widerstandslast in Wärme umgewandelt.

Eine Ausführungsform des Verfahrens zum Betreiben einer Kraft-Wärme-Kopplungsanlage sieht vor, dass einer ersten Steuerelektronik eines ersten Gleichstromstellers eine konstante, insbesondere maximale, elektrische Leistung, eine konstante, insbesondere minimale, Spannung oder ein konstanter, insbesondere maximaler, Strom der Energiequelle vorgegeben wird und dass in einem Zwischenkreis einer Wechselrichteranordnung einem zweiten Gleichstromsteller der Widerstandslast durch eine zweite Steuerelektronik eine Sollspannung des Zwischenkreises vorgegeben wird.

Wechselnden Leistungsanforderungen des Verbrauchers kann auf der Seite der Energiequelle, zum Beispiel einem Brennstoffzellenstack, beispielsweise leistungsgeführt durch Nachregelung sowohl der Spannung als auch des Stroms begegnet werden. Alternativ ist ein spannungsgeführter Betrieb unter Vorgabe einer konstanten Spannung der Energiequelle bei variablem Strom möglich. Es kann auch stromgeführt gearbeitet werden, wobei der Strom konstant gehalten wird, während sich die Zellspannung gemäß den Betriebsbedingungen, wie zum Beispiel Stacktemperatur oder Gaskonzentration, einstellt.

Die Regelung des leistungs-, spannungs- oder stromgeführten Betriebs erfolgt bei dem erfindungsgemäßen Verfahren mittels einer Steuerelektronik, die unmittelbar hinter der Energiequelle angeordnet ist. Die Vorgabe eines konstanten Sollwertes, insbesondere einer maximalen Leistung, einer minimalen Spannung oder eines maximalen Stroms, erfolgt dabei mittels des Sollwertgebers und des Reglers der Steuerelektronik.

Weil die Spannung in einem Betriebspunkt annähernd konstant bleibt, sind Strom- und Leistungsregelung annähernd identisch. Beim stromgeführten Betrieb kann mit geringem Aufwand über das Faraday-Gesetz die erforderliche Brennstoffmenge berechnet werden, sodass die Brenngasregelung erleichtert und ein Betrieb bei konstanter Brenngasnutzung ermöglicht wird. Von Vorteil beim spannungsgeführten Betrieb ist, dass durch die Vorgabe der Zellspannung verhindert werden kann, dass die Zellspannung auf unzulässig niedrige Werte abfällt, bei denen eine Schädigung der Anode auftritt.

Bei dem erfindungsgemäßen Verfahren kann darüber hinaus vorteilhafterweise eine Regelung der Spannung des Zwischenkreises vorgesehen sein. Dabei wird über eine zweite Steuerelektronik der im Zwischenkreis angeordneten Widerstandslast die Sollspannung des Zwischenkreises vorgegeben.

Die Regelung der Spannung des Zwischenkreises hat gegenüber einer Regelung der elektrischen Leistung des Erzeugers den Vorteil, dass auch im Falle von Abweichungen in den Messwerten sowie unbekannten oder nicht spezifizierten Verlusten in der Kraft-Wärme-Kopplungsanlage stets ein stabiler Betrieb möglich ist, weil der Kondensator des Zwischenkreises weder völlig entladen noch überladen werden kann.

Durch einen eventuell vorgesehenen Tiefpass, welcher insbesondere vor dem zweiten Sollwertgeber der Steuerelektronik angeordnet ist, wird verhindert, dass die durch die Stromnetzfrequenz hervorgerufenen Leistungsschwankungen auf die Widerstandslast übertragen werden.

Eine weitere Ausführungsform des Verfahrens zum Betreiben einer Kraft-Wärme-Kopplungsanlage ist dadurch gekennzeichnet, dass einem zweiten Gleichstromsteller der Widerstandslast, die zwischen der Energiequelle und einem ersten Gleichstromsteller einer Wechselrichteranordnung angeordnet ist, eine konstante, insbesondere maximale, elektrische Leistung, eine konstante, insbesondere minimale, Spannung oder ein konstanter, insbesondere maximaler, Strom der Energiequelle durch eine zweite Steuerelektronik vorgegeben wird und dass dem ersten Gleichstromsteller der Wechselrichteranordnung durch eine erste Steuerelektronik eine Sollspannung eines Zwischenkreises der Wechselrichteranordnung vorgegeben wird.

Hier ist die erste Steuerelektronik, mittels derer die elektrische Leistung, die Spannung oder der Strom der Energiequelle geregelt wird, dem Gleichstromsteller der Widerstandslast zugeordnet. Die Sollspannung des Zwischenkreises wird durch die zweite Steuerelektronik, welche dem Gleichstromsteller der Wechselrichteranordnung zugeordnet ist, vorgegeben.

In einer weiteren Ausführungsform des Verfahrens zum Betreiben einer Kraft-Wärme-Kopplungsanlage ist vorgesehen, dass ein ausgangsseitiger Wechselrichter eine Gleichspannung des Zwischenkreises der Wechselrichteranordnung in eine netzkonforme Wechselspannung umrichtet.

Insbesondere im Inselbetrieb ist es erforderlich, dass die Wechselrichteranordnung einen Regelkreis aufweist, der die von der Energiequelle bereitgestellte Gleichspannung in netzkonforme Wechselspannung, zum Beispiel 230 V, umrichtet. Zu diesem Zweck ist dem ausgangsseitigen Wechselrichter eine Steuerelektronik mit Sollwertgeber und Regler zugeordnet. Dabei ergibt sich die von der Kraft-Wärme-Kopplungsanlage abgegebene elektrische Leistung aus der Impedanz der angeschlossenen Verbraucher.

In einer vorteilhaften Ausführungsform des Verfahrens zum Betreiben einer Kraft-Wärme-Kopplungsanlage wird eine Abwärme der Widerstandslast für wenigstens einen der folgenden Zwecke genutzt: ein Warmhalten wenigstens einer Brennstoffzelle, eine Vorwärmung einer Prozessluft, Vorwärmung eines Wasser/Gas-Gemisches, Vorwärmung eines Prozesswassers, eine endotherme Dampfreformierungsreaktion, eine Erwärmung einer Entschwefelungsvorrichtung, Erwärmung von Heiz- und/oder Trinkwasser oder Luft für die Raumheizung, Wärmeversorgung eines Spitzenkessels.

Die vom Verbraucher nicht benötigte und in der Widerstandslast in Wärme umgewandelte elektrische Energie kann beispielsweise einem Brennstoffzellensystem zugeführt werden. Dadurch kann der Wirkungsgrad der Kraft-Wärme-Kopplungsanlage verbessert und ein Beitrag zur Energieeinsparung geleistet werden. Außerdem kann der benötigte Bauraum reduziert werden, da keine zusätzliche aktive Kühlung erforderlich ist.

Dabei kann beispielsweise eine Prozessluft unmittelbar vor einem Brennstoffzellenstack oder nahe dem Brennstoffzellenstack vorgewärmt werden, insbesondere im Bereich einer Nachbrennzone. Die Vorwärmung eines Wasser/Gas-Gemisches kann vorteilhafterweise vor einem Verdampfer des Brennstoffzellenstacks erfolgen. Des Weiteren kann ein Prozesswasser beispielsweise für einen Reformer des Brennstoffzellenstacks vorgewärmt werden. Vorteilhafterweise wird so vermieden, dass die Abwärme der Widerstandslast ungenutzt abgeführt wird. Neben der Verbesserung des Wirkungsgrades wird so eine zusätzliche Erwärmung der Umgebungsluft im Aufstellraum vermieden.

Alternativ oder zusätzlich ist eine Wärmeversorgung externer Komponenten möglich, d. h. von Komponenten, welche nicht unmittelbar zu Kraft-Wärme-Kopplungsanlage gehören.

Bei allen Ausführungsformen einer erfindungsgemäßen Kraft-Wärme-Kopplungsanlage kann es im Inselbetrieb vorkommen, dass die vom Verbraucher benötigte elektrische Leistung größer ist als die von der Energiequelle bereitgestellte.

In diesem Fall muss die Kraft-Wärme-Kopplungsanlage abgeschaltet werden. Als Kontrollgröße kann die Spannung des Zwischenkreises gewählt werden, falls die Wechselrichteranordnung der Kraft-Wärme-Kopplungsanlage einen Zwischenkreis umfasst. Ist kein Zwischenkreis vorgesehen, kann der Strom der Energiequelle als Kontrollgröße dienen. Es würde dann ein zu hoher Strom der Energiequelle, zum Beispiel ein zu hoher Brennstoffzellenstrom, detektiert.

Die Erfindung kann somit auch sinngemäß angewendet werden auf Anlagen mit Energiequellen, die Wechselstrom liefern und über einen leistungselektronischen Frequenzwandler an das elektrische Netz angeschlossen werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigt:
- Fig. 1: ein erstes Ausführungsbeispiel eines Schaltschemas einer Kraft-Wärme-Kopplungsanlage,
- Fig. 2: ein zweites Ausführungsbeispiel eines Schaltschemas einer Kraft-Wärme-Kopplungsanlage, sowie
- Fig. 3: einen Aufbau eines Brennstoffzellensystems mit einem Inverter.

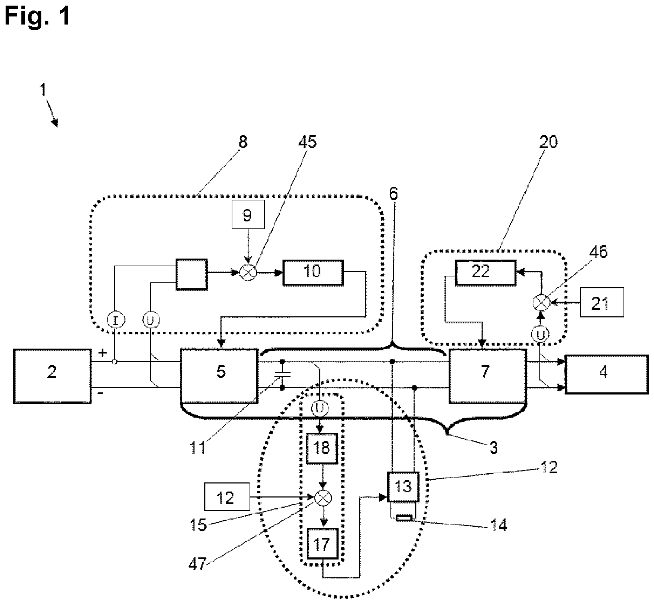

Fig. 1 zeigt ein Schaltbild einer erfindungsgemäßen Kraft-Wärme-Kopplungsanlage 1. Als Energiequelle 2 wird insbesondere ein offener tubularer Brennstoffzellenstack oder jedes andere Stack-Design verwendet. Dabei kommen vorzugsweise Festoxid-Brennstoffzellen (Solid Oxide Fuel Cells, SOFCs) zum Einsatz.

Der Energiequelle 2 ist eine Wechselrichteranordnung 3 nachgeschaltet, mittels derer die Energiequelle 2 mit einem elektrischen Verbraucher 4, insbesondere einem Stromnetz, verbunden ist. Die Wechselrichteranordnung 3 umfasst im Wesentlichen drei Komponenten: einen ersten, eingangsseitigen Gleichstromsteller 5, einen Zwischenkreis 6 und einen ausgangsseitigen Wechselrichter 7.

Dem ersten Gleichstromsteller 5 ist eine erste Steuerelektronik 8 mit einem ersten Sollwertgeber 9, einer Spannungsmesseinrichtung U, einer Stromstärkemesseinrichtung I und einem ersten Regler 10 zugeordnet. Der Regler 10 gibt einen Sollwert für den Gleichstromsteller 5 vor, beispielsweise in Form eines Pulsweiten-Modulations-Signals oder in Form einer analogen oder digitalen Sollwertvorgabe für die Treiber der Leistungselektronik.

Je nachdem, ob auf der Seite der Energiequelle 2 eine leistungs-, spannungs- oder stromgeführte Betriebsweise gewünscht ist, wird eine konstante elektrische Leistung, eine konstante Spannung oder ein konstanter Strom der Energiequelle 2 vorgegeben. Als Sollwert für die Leistung oder den Strom wird bevorzugt der jeweilige Maximalwert, für die Spannung der Minimalwert, eingestellt.

Der Zwischenkreis 6 weist einen Kondensator 11 und eine parallel zur Energiequelle 2 geschaltete, geregelte Widerstandslast 12 auf. Dabei umfasst die geregelte Widerstandslast 12 einen zweiten Gleichstromsteller 13, eine resistive Last 14 und eine zweite Steuerelektronik 15 mit einem Sollwertgeber 16 und einem Regler 17 sowie optional einen Tiefpass 18. Der Regler 17 gibt hierbei einen Sollwert für den Gleichstromsteller 13 vor.

Der Regler 17 erhält als Eingangssignal die Differenz zwischen der gemessenen Spannung des Zwischenkreises und einem Sollwert. Um beispielsweise am Ausgang die für ein angeschlossenes öffentliches Stromnetz notwendigen 230 V zu erreichen, wird typischerweise ein Spannungswert zwischen 350 V und 450 V auf der Gleichstromseite gewählt.

Wird vom Verbraucher 4 eine geringere elektrische Leistung benötigt als von der Energiequelle 2 bereitgestellt wird, wird die resistive Last 14 durch die Steuerelektronik 15 vorteilhafterweise so geregelt, dass die vom Verbraucher 4 nicht benötigte elektrische Leistung in der resistiven Last 14 in Wärme umgewandelt wird. Diese Wärme kann wiederum wenigstens einem Wärme verbrauchenden Prozess zugeführt werden. Beispielsweise kann die Wärme der resistiven Last 14 der Energiequelle 2, zum Beispiel einem Brennstoffzellensystem, zur Verfügung gestellt werden. Die Wärme der resistiven Last 14 kann u. a. zur Erwärmung eines Wärmeträgermediums, zum Beispiel Heiz- und/oder Trinkwasser oder Luft zur Raumheizung, zur Vorwärmung von Medien im Brennstoffzellensystem oder zum Warmhalten heißer Komponenten des Brennstoffzellensystems genutzt werden.

Der dem Komparator 47 vorgeschaltete Tiefpass 18 verhindert, dass durch eine Stromnetzfrequenz hervorgerufene Leistungsschwankungen auf die resistive Last 14 der Widerstandslast 12 übertragen werden. Die erste Steuerelektronik 8 kann ebenfalls einen Tiefpass aufweisen.

Ohne das Vorhandensein der resistiven Last 14 würde die vom Verbraucher 4 nicht benötigte elektrische Leistung beispielsweise im Kondensator 11 des Zwischenkreises 6 gespeichert, was einen Anstieg der Spannung im Zwischenkreis 6 zur Folge hätte.

Ausgangsseitig weist die Wechselrichteranordnung 3 einen Wechselrichter 7 auf, dem eine dritte Steuerelektronik 20 mit einem dritten Sollwertgeber 21, einer dritten Spannungsmesseinrichtung U und einem dritten Regler 22 zugeordnet ist.

Insbesondere im Inselbetrieb ist es erforderlich, dass der Wechselrichter 7 die Gleichspannung des Zwischenkreises 6 in netzkonforme Wechselspannung, z. B. 230 V, 50 Hz, umrichtet. Dabei ergibt sich die abgegebene Leistung aus der Impedanz der angeschlossenen Verbraucher 4.

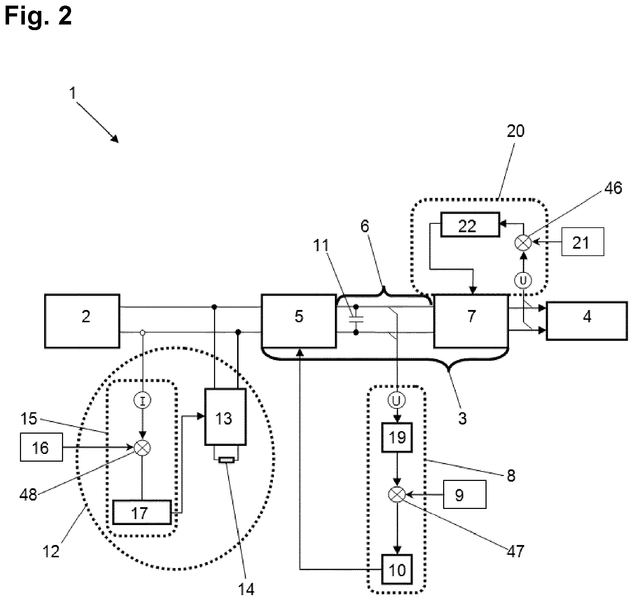

In Fig. 2 ist ein alternatives Schaltbild für eine erfindungsgemäße Kraft-Wärme-Kopplungsanlage 1 gezeigt, wobei die geregelte Widerstandslast 12 nicht im Zwischenkreis 6, sondern zwischen der Energiequelle 2 und der Wechselrichteranordnung 3 angeordnet ist. Dabei erfolgt im hier gezeigten Ausführungsbeispiel über die zweite Steuerelektronik 15 mit einer integrierten Stromstärkemesseinrichtung I eine Regelung des Stroms der Energiequelle 2.

Die Spannung des Zwischenkreises 6 wird über die Steuerelektronik 8 geregelt, welche dem eingangsseitigen Gleichstromsteller 5 der Wechselrichteranordnung 3 zugeordnet ist. Ein Tiefpass 19, welcher insbesondere vor dem Komparator 47 angeordnet ist, dämpft den Einfluss der Netzfrequenz auf die Spannung und erlaubt eine Regelung der Gleichspannung im Zwischenkreis.

Für den Fall, dass die Wechselrichteranordnung 3 keinen Zwischenkreis 6 aufweist oder in eine bestehende Wechselrichteranordnung 3 mit Zwischenkreis 6 nicht eingegriffen werden soll, kann der Gleichstromsteller 5 mit der Steuerelektronik 8 zur Regelung der Spannung des Zwischenkreises 6 entfallen. Der Zwischenkreis 6 ist beispielsweise nicht vorgesehen, wenn in der Wechselrichteranordnung 3 zur Spannungsanpassung ausgangseitig ein Transformator bei Netzfrequenz verwendet wird. Die Wechselrichteranordnung 3 umfasst auch dann keinen Zwischenkreis 6, wenn auf Grund einer geeignet hohen Spannung der Energiequelle, zum Beispiel einer geeignet hohen Spannung eines Brennstoffzellenstacks, kein Transformator verwendet wird.

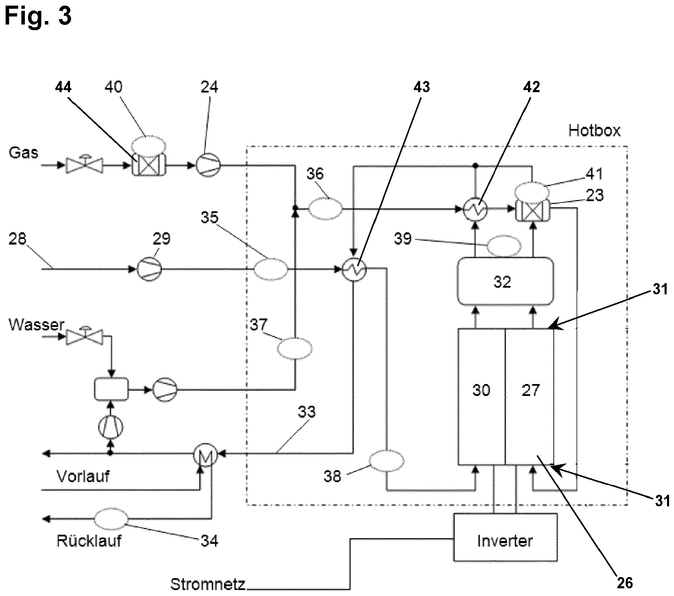

Fig. 3 zeigt den prinzipiellen Aufbau eines als Energiequelle 2 einsetzbaren Brennstoffzellensystems mit einem Inverter und möglichen Stellen, an denen die resistive Last 14 als Widerstandsheizung (34, 35, 36, 37, 38, 39, 40, 41) angeordnet werden kann. Dabei können auch mehrere Widerstandsheizungen eingesetzt werden.

Bei dem in Fig. 3 gezeigten, im Wesentlichen aus dem Stand der Technik bekannten Brennstoffzellensystem kann ein offener tubularer SOFC-Stack oder jedes andere SOFC-Stack-Design verwendet werden. Einem Reformer 23 werden Kohlenwasserstoffe, üblicherweise Erdgas, über einen Gasverdichter 24 zugeführt. Im Reformer 23 werden Kohlenwasserstoffe mit Wasser zu einem Gemisch aus Kohlenmonoxid und Wasserstoff umgesetzt, welches dann zu einem Eingang 25 wenigstens einer Brennstoffzelle 26 und von dort in eine Anode 27 der Brennstoffzelle 26 geführt wird. Luft, welche über eine Luft-Zuleitung 28 und einen Luftverdichter 29 zum Eingang 25 und dann in eine Kathode 30 der Brennstoffzellen 26 zugeführt wird, reagiert in den Brennstoffzellen 26 mit dem Kohlenmonoxid/Wasserstoff-Gemisch elektrochemisch zu Wasserdampf und Kohlendioxid, wobei elektrische Energie und Wärme frei werden. Überschüssige Kohlenwasserstoffe und überschüssige Luft werden durch einen Ausgang 31 der Brennstoffzelle 26 in eine Nachbrennzone 32 geführt, wo sie verbrannt werden. Heißes Brennstoffzellenabgas 33 der Nachbrennzone 32 wird genutzt, um Wasser für die Reformierung dem Verdampfer 42 zuzuführen und dort zu verdampfen. Weiterhin wird damit die endotherme Reformierungsreaktion mit Wärme versorgt und die Luft im Luftvorwärmer 43 vorgewärmt. Danach hat das Brennstoffzellenabgas 33 eine Temperatur von etwa 200 °C bis 300 °C.

Gemäß Fig. 3 kann die resistive Last 14 als Widerstandsheizung an den folgenden Positionen angeordnet sein: in einer Wärmeauskopplung 34, als Prozessluftvorwärmung 35, als Vorwärmung eines Wasser/Gas-Gemisches 36 vor einem Verdampfer, als Vorwärmung eines Prozesswassers 37 für einen Reformer 23, als Prozessluftvorwärmung 38 unmittelbar vor der Brennstoffzelle 26 oder in der Nähe der Brennstoffzelle 26 zum Warmhalten selbiger, als Heizung 39 im Bereich der Nachbrennzone 32 zum Warmhalten der Brennstoffzelle 26 - insbesondere von Vorteil bei geringer Brennstoffzellenleistung -, als Heizung 40 für eine Entschwefelungsvorrichtung, als Wärmequelle 41 für eine endotherme Dampfreformierung im Reformer 23.

Ist der Wärmebedarf des Brennstoffzellensystems geringer als die durch die resistive Last 14 zur Verfügung gestellte Abwärme, kann nicht benötigte Wärme mit dem Brennstoffzellenabgas 33 aus dem Brennstoffzellensystem abgeführt oder einem externen Nutzen zugeführt werden.

Darüber hinaus kann die resistive Last 14 in der Kraft-Wärme-Kopplungsanlage 1 auch außerhalb des Brennstoffzellensystems angeordnet sein, zum Beispiel in einem Warmwasserspeicher oder in einem Spitzenkessel. Weiterhin kann die resistive Last 14 in einem Heizkreislauf, einem Teil einer Raumluftheizung bzw. Lüftungsanlage oder in einem Raum eines Gebäudes montiert sein, um dort ihre Abwärme zu nutzen.

## Patentansprüche

1. Kraft-Wärme-Kopplungsanlage (1), insbesondere eine Brennstoffzellenanlage, zur Bereitstellung von elektrischer Leistung und Wärme, wobei die Wärme wenigstens einem Wärme verbrauchenden Prozess zuführbar ist, mit
- einer elektrischen Energiequelle (2), insbesondere einem Brennstoffzellenstack mit mindestens einer Brennstoffzelle (26), und
- einer der Energiequelle (2) nachgeschalteten Wechselrichteranordnung (3) zur Verbindung mit mindestens einem elektrischen Verbraucher (4), insbesondere einem Stromnetz, wobei die Wechselrichteranordnung (3) einen ersten, eingangsseitigen Gleichstromsteller (5) und einen ausgangsseitigen Wechselrichter (7) sowie gegebenenfalls einen Zwischenkreis (6) aufweist,
wobei eine geregelte Widerstandslast (12) parallel zur Energiequelle (2) geschaltet ist,
**dadurch gekennzeichnet, dass** die Wechselrichteranordnung (3) eine erste Steuerelektronik (8) zur Regelung einer elektrischen Leistung, einer Spannung und/oder eines Stromes der Energiequelle (2) aufweist, die dem ersten Gleichstromsteller (5) zugeordnet ist.

2. Kraft-Wärme-Kopplungsanlage (1) gemäß Anspruch 1,
**dadurch gekennzeichnet, dass** die Widerstandslast (12) einen zweiten Gleichstromsteller (13), eine resistive Last (14) und eine zweite Steuerelektronik (15) mit einem zweiten Sollwertgeber (16) und einem zweiten Regler (17) sowie gegebenenfalls einen zweiten Tiefpass (18) aufweist.

3. Kraft-Wärme-Kopplungsanlage (1) gemäß einem der Ansprüche 1 oder 2, **dadurch gekennzeichnet, dass** die Widerstandslast (12) im Zwischenkreis (6) zwischen dem ersten Gleichstromsteller (5) und dem Wechselrichter (7) angeordnet ist.

4. Kraft-Wärme-Kopplungsanlage (1) gemäß einem der Ansprüche 1 bis 3, **dadurch gekennzeichnet, dass** die Widerstandslast (12) zwischen der Energiequelle (2) und der Wechselrichteranordnung (3) angeordnet ist.

5. Kraft-Wärme-Kopplungsanlage (1) gemäß einem der Ansprüche 1 bis 4, **dadurch gekennzeichnet, dass** die resistive Last (14) als Widerstandsheizung (34, 35, 36, 37, 38, 39, 40, 41) ausgebildet ist.

6. Verfahren zum Betreiben einer Kraft-Wärme-Kopplungsanlage (1) gemäß wenigstens einem der Ansprüche 1 bis 5, wobei eine Summe aus einer von einer Energiequelle (2) an einen Verbraucher (4) abgegebenen elektrischen Leistung und einer von einer zur Energiequelle (2) parallel geschalteten Widerstandslast (12) verbrauchten elektrischen Leistung konstant gehalten wird, wobei vom Verbraucher (4) nicht benötigte Leistung durch eine Regelung der Widerstandslast (12) von dieser Widerstandslast aufgenommen wird, **dadurch gekennzeichnet, dass** einer ersten Steuerelektronik (8) eines ersten Gleichstromstellers (5) eine konstante, insbesondere maximale, elektrische Leistung, eine konstante, insbesondere minimale, Spannung oder ein konstanter, insbesondere maximaler, Strom der Energiequelle (2) vorgegeben wird und dass in einem Zwischenkreis (6) einer Wechselrichteranordnung (3) einem zweiten Gleichstromsteller (13) der Widerstandslast (12) durch eine zweite Steuerelektronik (15) eine Sollspannung des Zwischenkreises (6) vorgegeben wird.

7. Verfahren zum Betreiben einer Kraft-Wärme-Kopplungsanlage (1) gemäß Anspruch 6, **dadurch gekennzeichnet, dass** einem zweiten Gleichstromsteller (13) der Widerstandslast (12), die zwischen der Energiequelle (2) und einem ersten Gleichstromsteller (5) einer Wechselrichteranordnung (3) angeordnet ist, eine konstante, insbesondere maximale, elektrische Leistung, eine konstante, insbesondere maximale, Spannung oder ein konstanter, insbesondere maximaler, Strom der Energiequelle (2) durch eine zweite Steuerelektronik (15) vorgegeben wird und dass dem ersten Gleichstromsteller (5) der Wechselrichteranordnung (3) durch eine erste Steuerelektronik (8) eine Sollspannung eines Zwischenkreises (6) der Wechselrichteranordnung (3) vorgegeben wird.

8. Verfahren zum Betreiben einer Kraft-Wärme-Kopplungsanlage (1) gemäß einem der Ansprüche 6 oder 7, **dadurch gekennzeichnet, dass** ein ausgangsseitiger Wechselrichter (7) eine Gleichspannung des Zwischenkreises (6) der Wechselrichteranordnung (3) in eine netzkonforme Wechselspannung umrichtet.

9. Verfahren zum Betreiben einer Kraft-Wärme-Kopplungsanlage (1) gemäß einem der Ansprüche 6 bis 8, **dadurch gekennzeichnet, dass** eine Abwärme der Widerstandslast (12) für wenigstens einen der folgenden Zwecke genutzt wird: ein Warmhalten wenigstens einer Brennstoffzelle (26), eine Vorwärmung einer Prozessluft, Vorwärmung eines Wasser/Gas-Gemisches, Vorwärmung eines Prozesswassers, eine endotherme Dampfreformierungsreaktion, eine Erwärmung einer Entschwefelungsvorrichtung, Erwärmung von Heiz- und/oder Trinkwasser, Wärmeversorgung eines Spitzenkessels und/oder Erwärmung von Luft für die Raumheizung.

## Claims

1. Cogeneration plant (1), in particular a fuel cell system, for providing electric power and heat, wherein the heat is able to be supplied to at least one heat- consuming process, having
- an electrical energy source (2), in particular a fuel cell stack containing at least one fuel cell (26), and
- an inverter arrangement (3), connected downstream of the energy source (2), for connection to at least one electrical consumer (4), in particular a power grid, wherein the inverter arrangement (3) has a first, input-side DC chopper (5) and an output-side inverter (7), and possibly a link circuit (6),
wherein a controlled resistive load (12) is connected in parallel with the energy source (2),
**characterized in that** the inverter arrangement (3) has first control electronics (8) for controlling an electric power, a voltage and/or a current of the energy source (2) and that are assigned to the first DC chopper (5).

2. Cogeneration plant (1) according to Claim 1,
**characterized in that** the resistive load (12) has a second DC chopper (13), a resistive load (14) and second control electronics (15) having a second setpoint value generator (16) and a second controller (17) and possibly a second low-pass filter (18).

3. Cogeneration plant (1) according to either of Claims 1 and 2,
**characterized in that** the resistive load (12) is arranged in the link circuit (6) between the first DC chopper (5) and the inverter (7).

4. Cogeneration plant (1) according to one of Claims 1 to 3, **characterized in that** the resistive load (12) is arranged between the energy source (2) and the inverter arrangement (3).

5. Cogeneration plant (1) according to one of Claims 1 to 4, **characterized in that** the resistive load (14) is in the form of a heating resistor (34, 35, 36, 37, 38, 39, 40, 41).

6. Method for operating a cogeneration plant (1) according to at least one of Claims 1 to 5, wherein a sum of an electric power output by an energy source (2) to a consumer (4) and an electric power consumed by a resistive load (12) connected in parallel with the energy source (2) is kept constant, wherein power not required by the consumer (4) is absorbed by the resistive load (12) by controlling this resistive load, **characterized in that** a constant, in particular maximum electric power, a constant, in particular minimum voltage or a constant, in particular maximum current of the energy source (2) is predefined for first control electronics (8) of a first DC chopper (5), and **in that**, in a link circuit (6) of an inverter arrangement (3), a setpoint voltage of the link circuit (6) is predefined for a second DC chopper (13) of the resistive load (12) by second control electronics (15).

7. Method for operating a cogeneration plant (1) according to Claim 6, **characterized in that** a constant, in particular maximum electric power, a constant, in particular maximum voltage, or a constant, in particular maximum current of the energy source (2) is predefined for a second DC chopper (13) of the resistive load (12), which is arranged between the energy source (2) and a first DC chopper (5) of an inverter arrangement (3), by second control electronics (15), and **in that** a setpoint voltage of a link circuit (6) of the inverter arrangement (3) is predefined for the first DC chopper (5) of the inverter arrangement (3) by first control electronics (8) .

8. Method for operating a cogeneration plant (1) according to either of Claims 6 and 7, **characterized in that** an output-side inverter (7) converts a DC voltage of the link circuit (6) of the inverter arrangement (3) into a grid-compliant AC voltage.

9. Method for operating a cogeneration plant (1) according to one of Claims 6 to 8, **characterized in that** waste heat from the resistive load (12) is used for at least one of the following purposes: keeping at least one fuel cell (26) warm, preheating process air, preheating a water/gas mixture, preheating process water, an endothermic steam reformation reaction, heating a desulfurization device, heating hot water and/or drinking water, supplying heat to a peak load boiler and/or heating air for space heating purposes.

## Revendications

1. Système de cogénération (1), en particulier un système de cellules de combustible, destiné à produire de l'énergie électrique et de la chaleur, la chaleur pouvant être amenée à au moins un processus consommateur de chaleur, le système comprenant
- une source d'énergie électrique (2), en particulier un empilement de cellules de combustible comprenant au moins une cellule de combustible (26), et
- un ensemble onduleur (3) monté en aval de la source d'énergie (2) et destiné à être relié à au moins un consommateur électrique (4), notamment un réseau électrique, l'ensemble onduleur (3) comportant un premier convertisseur à courant continu côté entrée (5) et un onduleur côté sortie (7) et éventuellement un circuit intermédiaire (6),
une charge ohmique régulée (12) étant montée en parallèle avec la source d'énergie (2) ;
**caractérisé en ce que** l'ensemble onduleur (3) comporte une première électronique de commande (8) destinée à réguler une puissance électrique, une tension et/ou un courant de la source d'énergie (2) qui est associée au premier convertisseur de courant continu (5).

2. Système de cogénération (1) selon la revendication 1, **caractérisé en ce que** la charge ohmique (12) comporte un deuxième convertisseur de courant continu (13), une charge résistive (14) et une deuxième électronique de commande (15) comportant un deuxième transmetteur de valeurs de consigne (16) et un deuxième régulateur (17) et éventuellement un deuxième filtre passe-bas (18).

3. Système de cogénération (1) selon l'une des revendications 1 et 2,
**caractérisé en ce que** la charge ohmique (12) est disposée dans le circuit intermédiaire (6) entre le premier convertisseur de courant continu (5) et l'onduleur (7).

4. Système de cogénération (1) selon l'une des revendications 1 à 3, **caractérisé en ce que** la charge ohmique (12) est disposée entre la source d'énergie (2) et l'ensemble onduleur (3).

5. Système de cogénération (1) selon l'une des revendications 1 à 4, **caractérisée en ce que** la charge résistive (14) est réalisée sous forme d'un chauffage ohmique (34, 35, 36, 37, 38, 39, 40, 41).

6. Procédé de fonctionnement d'un système de cogénération (1) selon l'une au moins des revendications 1 à 5,
la somme formée d'une puissance électrique, fournie par une source d'énergie (2) à un consommateur (4), et d'une puissance électrique consommée par une charge ohmique (12) montée en parallèle avec la source d'énergie (2) étant maintenue constante, la puissance non requise par le consommateur (4) étant absorbée par la charge ohmique (12) par une régulation de celle-ci, **caractérisé en ce qu'**une puissance électrique constante, en particulier maximale, une tension constante, en particulier minimale, ou un courant constant, en particulier maximal, de la source d'énergie (2) est spécifié(e) à une première unité de commande électronique (8) d'un premier convertisseur de courant continu (5) et **en ce que**, dans un circuit intermédiaire (6) d'un ensemble onduleur (3), une tension de consigne du circuit intermédiaire (6) est spécifiée par une deuxième unité de commande électronique (15) à un deuxième convertisseur de courant continu (13) de la charge ohmique (12).

7. Procédé de fonctionnement d'un système de cogénération (1) selon la revendication 6, **caractérisé en ce qu'**une puissance électrique constante, en particulier maximale, une tension constante, en particulier maximale, ou un courant constant, en particulier maximal, de la source d'énergie (2) est spécifiée par une deuxième unité de commande électronique (15) à un deuxième convertisseur de courant continu (13) de la charge ohmique (12), qui est disposée entre la source d'énergie (2) et un premier convertisseur de courant continu (5) d'un ensemble onduleur (3) et **en ce qu'**une tension de consigne d'un circuit intermédiaire (6) de l'ensemble onduleur (3) est spécifiée par une première électronique de commande (8) au premier convertisseur de courant continu (5) de l'ensemble onduleur (3).

8. Procédé de fonctionnement d'un système de cogénération (1) selon l'une des revendications 6 et 7, **caractérisé en ce qu'**un onduleur côté sortie (7) convertit une tension continue du circuit intermédiaire (6) de l'ensemble onduleur (3) en une tension alternative conforme au réseau.

9. Procédé de fonctionnement d'un système de cogénération (1) selon l'une des revendications 6 à 8, **caractérisé en ce que** la chaleur dissipée de la charge ohmique (12) est utilisée pour l'un au moins des buts suivants : maintien au chaud d'au moins une cellule de combustible (26), préchauffage de l'air de traitement, préchauffage d'un mélange eau/gaz, préchauffage de l'eau de traitement, réaction d'épuration de vapeur endothermique, chauffage d'un dispositif de désulfuration, chauffage d'eau de chauffage et/ou d'eau potable, apport de chaleur à une chaudière de pointe et/ou chauffage de l'air pour le chauffage de locaux.
